# EUROPEAN PATENT SPECIFICATION

(11) **EP 1 683 999 B1**
(45) Date of publication and mention of the grant of the patent: **19.12.2007**
(21) Application number: 06000805.9
(22) Date of filing: 16.01.2006
(51) Int. Cl.: F17C 5/06, F17C 6/00, F17C 9/00, F17C 9/02, F17C 13/02, F17C 13/08

(54) **Method for delivering cryogenic fluid, in liquid or in gas phase, to a network of receiving fuel stations**
Verfahren zur Abgabe von kryogenem Fluid, in flüssigem oder in gasförmigem Zustand, in ein Netz von Empfangstankstellen
Procédé pour délivrer un fluide cryogénique, à l'état liquide ou gazeux, à un réseau de stations services receveuses

(30) Priority: 20.01.2005 US 39264
(43) Date of publication of application: 26.07.2006
(73) Proprietor: Air Products and Chemicals, Inc., Allentown, PA 18195-1501 (US)
(72) Inventor: Farese, David John, Riegelsville PA 18077 (US); Sakach, Thomas James, Fleetwood PA 19522 (US); Imler, David Eli, Orefield PA 18069 (US); Joseph, Thomas, Emmaus PA 18049 (US)
(74) Representative: Rögner, Jürgen

(56) References cited:
- EP-A- 1 348 620
- WO-A-20/05052439
- DE-A1- 10 107 187
- FR-A- 2 722 760
- FR-A- 2 851 301
- GB-A- 2 416 390
- US-A- 5 762 119
- US-A1- 2005 016 185
- US-A1- 2006 005 895

## Description

This invention relates generally to a method and apparatus for supplying cryogenic fluids, and more particularly, to a method and apparatus for transporting a cryogenic fluid in primarily a liquefied state and delivering the cryogenic fluid to receiving vessels alternatively as a liquid, compressed gas, and as a supercritical fluid.

Cryogenic fluids, such as hydrogen, are typically transported as either a compressed gas or a cryogenic liquid. The form, phase or state of the cryogenic fluid supplied to a receiving facility, such as a customer of a cryogenic fluid supplier, depends on many factors and considerations, including the usage rate of the product and whether the cooling capacity of the liquid cryogenic fluid is needed by the customer. Of course, if the cooling capacity of the liquid cryogenic fluid is needed, then a liquid supply is required. If no cooling capacity is needed by the customer, then an option exists for the delivery of cryogenic fluid. Typically, if the usage rate is high, then a cryogenic fluid in the form of a liquid is preferably provided to a customer since a larger quantity of product can be stored for a given vessel volume. Conversely, if the usage rate is low, then a cryogenic fluid in the form of a compressed gas is preferably provided to a customer since liquid is generally more expensive than compressed gas due to the cost of liquefaction. The balance between providing the customer with liquid or compressed gas is one of economics. As a result, cryogenic fluids suppliers typically employ one supply chain or distribution system for the transportation and delivery of a compressed gas and a separate or different supply chain or distribution system for the transportation and delivery of a cryogenic liquid.

By way of example, hydrogen can be supplied to a customer as a liquid from a liquid trailer. Alternatively, hydrogen can be supplied to a customer as a compressed gas from cylinders, tube trailers and, in some cases, through a pipeline. When tube trailers are used, hydrogen is often offloaded from the trailers by utilizing a pressure difference between the tubes on the trailer and the receiving tubes or vessels. Alternatively, the entire tube trailer may be dropped off or left behind and exchanged for a depleted or relatively empty tube trailer. Equipment has been optimized to allow cryogenic fluids to be transported at high pressures, thereby maximizing the amount of fluid stored on, for example, a trailer. The sequencing or logistics of customer deliveries has also been optimized in order to minimize the amount of residual gas in tubes when a delivery vehicle returns to a fill station after completing deliveries.

Although the cryogenic fluid delivered in a tube trailer is typically called a compressed gas in the industry, it is stored above its critical pressure and is therefore, technically speaking, a supercritical fluid.

For the purposes of this disclosure, a compressed gas is defined as a fluid at a pressure greater than the fluid's critical pressure and at a temperature greater than (-148°F) -100°C.

It has not been contemplated until the present invention to combine cryogenic liquid and compressed gas supply chains in a manner that enables cryogenic fluids to be transported as primarily a liquid and delivered alternatively as a compressed gas or a liquid wherein the compressed gas is delivered through an apparatus where the liquid is pumped through a piston-type pump/compressor (hereafter simply piston-type pump) to a supercritical fluid followed by heating in a heat exchanger. The present invention provides a method and apparatus which reduces the number of vehicles required to transport cryogenic fluids, such as hydrogen, thereby also reducing the amount of fuel and labor costs presently attributable to the delivery of cryogenic fluids by cryogenic fluid suppliers. Such a method and apparatus as described in the present invention would be useful to cryogenic fluid suppliers since it would enable such suppliers to supply both types of customers with a common supply vehicle and simplify logistics.

In addition, the method and apparatus of the present invention are further distinguished from existing art in this field since it has not been previously contemplated to use an engine, such as an internal combustion engine, for example, to supply the energy or power necessary to operate equipment which compresses and vaporizes the cryogenic fluid. Moreover, it has not been previously contemplated to use a hydraulic pump and hydraulic fluid to transfer energy or power from the engine to the equipment which compresses and heats the cryogenic fluid. Such a method and apparatus as described in the present invention is useful for supplying cryogenic fluid to locations without electricity.

### BRIEF SUMMARY OF THE INVENTION

This invention is a method as defined by claim 9 and an apparatus as defined by claim 1 for supplying a cryogenic fluid. The cryogenic fluid is transported in a liquefied state and can be selectively offloaded as a compressed gas or as a liquid.

The method for supplying a cryogenic fluid alternatively as a compressed gas or a liquid includes multiple steps. The first step is to transport a storage vessel containing liquid cryogenic fluid to a first location, such as a customer site. The second step is to increase the pressure of at least a portion of the liquid cryogenic fluid to a pressure greater than about (1000 psig) 6.89 MPa in order to form a supercritical cryogenic fluid. The third step is to subsequently heat the supercritical cryogenic fluid in a heat exchanger in order to form the compressed gas. The fourth step is to offload at least a portion of the compressed gas at the first location. The fifth step is to transport the storage vessel to a second location, such as a second customer site. The sixth step is to offload at least a portion of the liquid cryogenic fluid at the second location. The sequence of offloading compressed gas and liquid is of no consequence. The steps directed to offloading liquid can be before or after the steps directed to offloading compressed gas.

In one variation of the method, a preceding step of loading liquid cryogenic fluid into the storage vessel at a transfill facility is included.

In another variation of the method, the step of increasing the pressure is achieved by a piston-type pump and the additional step of powering the piston-type pump by an internal combustion engine is included in the method.

In another variation of the method, an additional step of conveying power from an internal combustion engine to the piston-type pump via a hydraulic fluid is included.

In still another variation of the method, the additional steps of substantially depleting the liquid cryogenic fluid in the cryogenic storage vessel leaving a residual gas; compressing at least a portion of the residual gas contained in the storage vessel to form a compressed residual gas; and subsequently offloading at least a portion of the compressed residual gas are included in the method.

In yet another variation of the method, an additional step is included for monitoring at least one of a temperature, a pressure, and a flow rate.

In general terms, the apparatus for carrying out the method is moveable and comprises a mobile support means, a cryogenic liquid storage vessel, a piston-type pump, a heat exchanger, a liquid dispensing line, and a gas discharge line. Preferably, the apparatus also comprises a hydraulic pump driven by an internal combustion engine with a power take-off for transferring power via a hydraulic fluid, to the piston-type pump and to an optional fan for the heat exchanger. More preferably, the internal combustion engine is part of the motor vehicle used for transporting the apparatus from location to location.

It is an advantage of this invention to have an apparatus able to selectively offload both liquid and compressed cryogenic fluid. It is an additional advantage to offload without the need for external electric power for the piston-type pump and optional heat exchanger fan.

### BRIEF DESCRIPTION OF SEVERAL VIEWS OF THE DRAWINGS

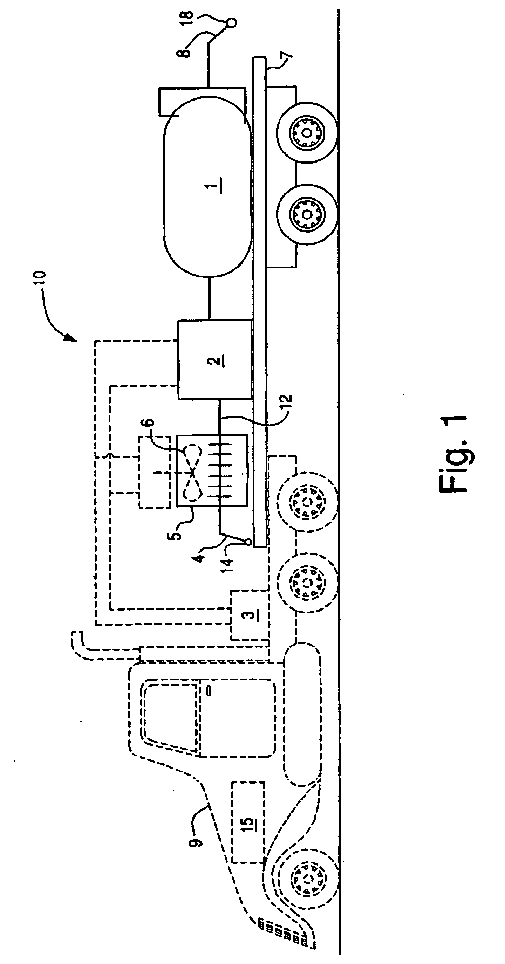

Figure 1 is a schematic of the cryogenic fluid supply apparatus of the present invention.

### DETAILED DESCRIPTION OF THE INVENTION

For the purposes of this disclosure, a cryogenic fluid is defined as a gas that liquefies at temperatures below (-150°F) -101 °C at atmospheric pressure. Cryogenic fluids include hydrogen, helium, argon, oxygen, nitrogen, liquefied natural gas.

As used herein, a piston-type pump is a device for producing fluid flow by volumetric displacement using a piston. A piston-type pump is capable of moving gas, liquid, and supercritical fluid. Piston-type pumps are known by those of ordinary skill in the art and are referred to, for example, in U.S. Pat. No. 5,243,821 (Schuck et al.).

Mobile support means include, but are not limited to, platforms, pallets, skids, rail cars, and trailers for mounting the various pieces of delivery and storage equipment of a cryogenic fluid transportation and delivery apparatus. The mobile support means may be mounted on a self-propelled transportation means (e.g. trucks, tractor-trailers, aircraft, or ships) or on transportation means which must be moved by separate locomotion (e.g. rail cars, trailers, barges, transportable skids, and the like).

A motor vehicle is defined herein as any self-propelled, wheeled conveyance.

A power take-off is defined as any mechanical connection disposed for receiving mechanical power from the internal combustion engine.

There has been a long felt need to reduce the number of trucks, trailers, fuel, and labor costs needed for hauling hydrogen and other cryogenic fluids to customer sites. Major industrial gas companies maintain two separate fleets of vehicles, a first fleet for delivering compressed gas and a second fleet for delivering liquid. Maintaining two separate fleets is costly in terms of capital, fuel, and labor.

While U.S. Pat. No. 3,369,372 teaches to transport helium as a liquid and to deliver helium either in a gaseous or liquid form, '372 teaches only to vaporize the gas followed by compression in a compressor for gaseous delivery. So while liquid hydrogen can be used to provide compressed hydrogen gas, the difficulty in the past has been the slow rate of transfer of gas due to the sequence of heating and then compressing the gas and also a lack of power to drive a pump in some locations. Generally, a 220V power source is required to drive the compressor.

While U.S. Pat. No. 5,762,119 teaches that the step of transferring gas may be carried out by vaporizing liquid helium and then pumping the vaporized gas into the storage vessel or alternatively pumping liquefied gas with a liquid pump followed by vaporization, '119 teaches to transport helium as a liquid and to deliver helium exclusively as a gas.

Documents WO 2005/052439, EP 1348620, FR 2722760, FR 2851301, show apparatus and methods for supplying cryogenic fluid.

The current invention is a method for supplying a cryogenic fluid alternatively as a liquid and compressed gas. The method comprises transporting a storage vessel containing cryogenic fluid in the liquid state to a first location, such as a customer of a cryogenic fluid supplier needing the cryogenic gas in compressed gas form, increasing the pressure of at least a portion of the cryogenic fluid in the liquid state to a pressure exceeding (1000 psig) 6.89 MPa by a piston-type pump to form a supercritical fluid, heating at least a portion the supercritical fluid thereby forming a compressed gas, offloading at least a portion of the compressed gas at the first location, transporting the storage vessel to a second location, such as a customer of a cryogenic fluid supplier needing the cryogenic fluid in liquid form, and offloading at least a portion of the cryogenic fluid in the liquid state at the second location.

The sequence of offloading compressed gas and liquid is of no consequence. The steps directed to offloading liquid can be before or after the steps directed to offloading compressed gas.

The step of heating at least a portion of the supercritical fluid is achieved in a suitable heat exchanger. Heat exchangers are well-known to one of ordinary skill in the art.

Although not a step of the method of the invention, the method is directed to an apparatus where at least one of the cryogenic storage vessel, the piston-type pump, and the heat exchanger are mounted on a mobile support means as is the case with the apparatus described below.

In another embodiment of the method of the invention, the cryogenic fluid in the liquid state is first loaded into the storage vessel prior to transporting the storage vessel to the first or second locations. In this embodiment then, the method further comprises the preceding step of loading the cryogenic fluid in the liquid state into the storage vessel at a third location, such as a cryogenic gas supply depot, transfill, or production facility.

Another embodiment of the method of the invention further comprises the step of powering the piston-type pump by an internal combustion engine. The internal combustion engine may be part of a motor vehicle that hauls the mobile support means or an independent internal combustion engine. The power from the internal combustion engine can be conveyed to the piston-type pump by direct mechanical connection or preferably through a hydraulic means. In this preferred embodiment, the internal combustion engine is mechanically connected to a hydraulic pump that circulates hydraulic fluid to the piston-type pump. Power for operating the piston-type pump is conveyed via the hydraulic fluid.

It is possible to use the method of the present invention in a manner that substantially depletes the liquid cryogenic fluid in the cryogenic storage vessel. When the vessel is substantially depleted of liquid cryogenic fluid, any residual gas contained in the storage vessel can be compressed using the piston-type pump and subsequently offloaded to a customer facility. Therefore another embodiment of the method of the invention further comprises the steps of depleting the cryogenic fluid in the liquid state from the storage vessel leaving a residual gas, compressing at least a portion of the residual gas, preferably in the piston-type pump, to form a compressed residual gas, and offloading at least a portion of the compressed residual gas.

Optionally, an additional step of monitoring one or more of a temperature, a pressure, and a flow rate can be added to any of the embodiments of the method of the invention.

Referring to FIG. 1, the cryogenic fluid supply apparatus of the present invention is shown and generally designated by the numeral 10. This apparatus is suitable for carrying out the method of the invention. Auxiliary components such as fittings and valves are omitted from FIG. 1 for clarity. One of ordinary skill in the art clearly will be familiar with the auxiliary components required for function and safety and will be able to make and use the invention based on this disclosure. Valves can be manual or actuated depending on their position or function. For hydrogen transportation and delivery, actuated valves are preferably pneumatically operated using helium gas. For other cryogenic fluids, such as oxygen, nitrogen, and argon, compressed air may be suitable to pneumatically actuate some of the valves. It may also be possible to use spark proof electrically actuated valves.

The major components of the apparatus 10 are a mobile support means 7, a cryogenic liquid storage vessel 1, a piston-type pump 2, a heat exchanger 5, a first conduit 4 for dispensing cryogenic fluid as a compressed gas, and a second conduit 8 for dispensing cryogenic fluid as a liquid. The piston-type pump 2 is disposed, or positioned, to receive cryogenic fluid from the cryogenic storage vessel 1. The heat exchanger 5 is disposed, or positioned, to receive cryogenic fluid from the piston-type pump 2.

Preferably the apparatus further comprises a motor vehicle 9 having an internal combustion engine 15, a hydraulic pump 3, and an optional fan 6.

In one embodiment, the invention is an apparatus for supplying cryogenic fluid comprising a mobile support means 7, a storage vessel 1 for storing liquid cryogenic fluid disposed on the mobile support means 7, a piston-type pump 2 disposed on the mobile support means **7** in fluid communication with the storage vessel **1,** a heat exchanger **5** in fluid communication with the piston-type pump 2 and disposed to receive cryogenic fluid from the piston-type pump, a first conduit 4 in fluid communication with the heat exchanger and in fluid communication with a first connection fitting 14, where the first conduit 4 is disposed to receive cryogenic fluid from the heat exchanger 5, and a second conduit 8 in fluid communication with the storage vessel 1 and in fluid communication with a liquid cryogenic fluid connection fitting 18 for offloading liquid cryogenic fluid.

The storage vessel 1 and piston-type pump 2 are disposed on the mobile support means 7. For the purposes of this disclosure, "disposed on the mobile support means" is to be interpreted to mean mounted on, placed on, positioned on, supported by, attached to, or otherwise connected to the mobile support means, either directly or indirectly.

The heat exchanger 5 can be separate from the mobile support means 7, but is preferably disposed on the mobile support means 7.

In another embodiment of the invention, the apparatus further comprises a motor 15 that provides power to the piston-type pump 2. Preferably the motor 15 is an internal combustion engine.

In another embodiment of the invention, the apparatus further comprises a motor vehicle 9, shown in FIG. 1 as a tractor, having an internal combustion engine 15 for transporting the mobile support means 7, wherein the internal combustion engine 15 also provides power to the piston-type pump 2.

In FIG. 1, the apparatus is, for illustration purposes, shown as a tractor-trailer combination, which can be separated. Alternatively, the mobile support means can be integrated with or part of the motor vehicle.

In a preferred embodiment, the apparatus of the current invention includes a power take-off (not shown) in communication with the internal combustion engine for transferring power to the piston-type pump 2.

In another embodiment, the apparatus further comprises a hydraulic pump 3 in communication with the power take-off for transferring power from the internal combustion engine 15 to the piston-type pump 2 through a hydraulic fluid.

In another embodiment, the heat exchanger 5 has a surface in communication with ambient air for transfer of heat from the ambient air to the cryogenic fluid. Preferably the apparatus further comprises a fan 6 for circulating ambient air over the surface of the heat exchanger 5. The fan 6 can be powered either through the hydraulic fluid or by electrical current generated by the motor vehicle.

As illustrated in FIG. 1, mobile support means 7 is in the form of a trailer having a plurality of wheels and is adapted for connection to and towing by a motor vehicle 9, such as a truck tractor. The cryogenic liquid storage vessel **1,** the piston-type pump **2,** and heat exchanger **5** are disposed on the mobile support means **7.** In an alternative embodiment (not shown), the components could be mounted on a skid which could then be transported on a flat bed trailer or integrated on a flat bed truck.

The cryogenic liquid storage vessel 1 is an insulated cryogenic tank. Cryogenic liquid storage vessels are well-known in the cryogenic gas supply industry. Preferably, a pressure buildup system (not shown) associated with vessel 1 is provided. Such vessels and pressure buildup systems are well-known by those of ordinary skill in the art of cryogenic fluid supply. Cryogenic liquid storage vessels contain both liquid and gas, with the higher density liquid below and gas in the head space.

A piston-type pump 2 is in fluid communication with storage vessel 1. Liquid, gas, or supercritical fluid can be withdrawn from storage vessel 1 and delivered to the piston-type pump 2. Preferably the piston-type pump is a single stage reciprocating piston-type machine having a volume displacement of about 1.13 to 5.66m³ per hour (40 to 200 ACFH (actual cubic feet per hour) (producing 26,000 SCFH mass flow rate at 135 psig and -400°F gaseous inlet condition for hydrogen feed). For a given speed of rotation it displaces a constant volumetric flow rate. The preferred piston-type pump, being single stage, can pressurize effectively from a wide range of inlet temperatures, pressures or densities since balance of the pressure ratio to feed subsequent stages is not necessary. The displacement of the pump can be quite small and still provide a large mass flow since its normal operation is in what is referred to as the cryogenic temperature range.

A heat exchanger 5 is in fluid communication with the piston-type pump 2 and is disposed to receive cryogenic fluid from the piston-type pump 2 via conduit 12. Heat exchanger 5 may be of any chosen design, for example, a finned tube heat exchanger where heat is provided by ambient air. Preferably, optional fan 6 is provided to improve heat transfer. Alternatively, heat exchanger 5 may be a hot water shell and tube with an electric heater used as the heat source. Heat may also be drawn from the engine cooling system of the motor vehicle **9.** Other suitable heat exchanger designs can be easily identified by those skilled in the art. Heat exchanger 5 is preferably disposed on the mobile support means 7, but can be positioned adjacent to the mobile support means 7 or as part of the customer cryogenic fluid storage facility or customer station.

First conduit 4 is a gas conveying conduit, for example a pipe or flexible hose, that is in fluid communication with the heat exchanger 5, and is provided for offloading the cryogenic fluid at pressures exceeding (1000 psig) 6.89 MPa. The first conduit 4 has a first end and a second end wherein the first end of the first conduit is in fluid communication with the heat exchanger 5 and disposed to receive cryogenic fluid from the heat exchanger 5. The second end of the first conduit 4 is in fluid communication with a compressed gas connection fitting 14, any high pressure gas connection suitable for connecting to another storage vessel such as a customer's compressed gas tube bank or to compressed gas storage cylinders. As compressed gases are supplied routinely, suitable compressed gas connection fittings are well-known to those of ordinary skill in the art.

Second conduit 8, a liquid conveying conduit, for example a pipe or flexible hose, is in fluid communication with the vessel 1, and is provided for offloading the cryogenic fluid as a liquid. Second conduit 8 has a first end and a second end wherein the first end of the second conduit is in fluid communication with the cryogenic liquid storage vessel and disposed to receive liquid cryogenic fluid. The second end of the second conduit is in fluid communication with a liquid cryogenic fluid connection fitting 18, which is any connection suitable for connecting to another cryogenic liquid storage vessel such as can be found at a customer site with liquid hydrogen storage. As cryogenic liquids are supplied routinely, suitable liquid cryogenic fluid connection fittings are well-known and can be selected by those of ordinary skill in the art. Liquid is preferably offloaded through connection fitting **18** without the use of a pump, but a pump may be used. Second conduit 8 may also be used for filling vessel 1 with cryogenic fluid in liquid form at a production facility or transfill station. Alternatively, a separate conduit can be used for the liquid fill operation. Often the fill connection tees off to allow supply to storage vessel 1 from the top, thereby entering the vapor space, or from the bottom, thereby entering the liquid space of the vessel. If desired, the pressure in vessel 1 can be decreased by filling from the top of storage vessel 1.

Preferably, an internal combustion engine provides power to the pump 2. More preferably, the internal combustion engine 15 of the motor vehicle 9 that hauls the mobile support means 7 provides the power to the pump 2 through a power take off (not shown). Mechanical connections from the engine to the pump 2 are possible, but it is preferred to use a hydraulic pump **3** to transfer the power from the internal combustion engine of the truck tractor to the piston-type pump 2 via a hydraulic fluid. The power take-off is connected to a hydraulic pump that circulates high pressure hydraulic fluid through piping or tubing and drives the piston-type pump 2.

The internal combustion engine can also be used, with or without the hydraulic pump 3, to power the optional fan 6. Alternatively, the electrical system (not shown) of the motor vehicle 9 can be used to power the optional fan 6. Powering the piston-type pump 2 and optional fan 6 via the motor vehicle 9 is especially useful for delivery to remote sites where a suitable electric power supply may be unavailable.

### EXAMPLE

To use the invention for supplying cryogenic fluid, for example hydrogen, the cryogenic fluid supply apparatus 10 including motor vehicle 9, for example a tractor, are driven to a hydrogen supply depot or production facility having liquid hydrogen. Liquid hydrogen is loaded into cryogenic storage vessel 1 via conduit 8. Alternatively, a second liquid line with suitable connections (not shown) can be used for the loading step. The cryogenic fluid supply apparatus, having a load of liquid hydrogen, is driven to a location having a need for compressed gaseous hydrogen. This location can be a customer site where the hydrogen is consumed at this site. Compressed gas connection fitting 14 is used to create fluid communication between first conduit 4 and a compressed hydrogen gas receiving facility. The motor vehicle or tractor is put into neutral and the power take off is connected to drive the hydraulic pump 3. The hydraulic pump circulates high pressure hydraulic fluid to provide power to the piston-type pump 2 and the fan 6. Liquid hydrogen is pumped from vessel 1 through reciprocating piston-type pump 2 to an elevated pressure exceeding (1000 psig) 6.89 MPa thereby forming a supercritical fluid. The supercritical fluid is then heated in heat exchanger 5 to form a compressed gas. The compressed gas is then offloaded via gas conduit 4. The temperature and pressure of the offloaded hydrogen is monitored and the flow is controlled by suitable means known in the art.

After a desired amount of hydrogen as a compressed gas is transferred at the location, the pumps are turned off and gas conduit 4 is disconnected from the receiving facility.

Subsequently or alternatively, after filling cryogenic storage vessel 1 at a hydrogen supply depot or production facility with liquid hydrogen, the cryogenic fluid supply apparatus 10 including motor vehicle 9 is driven to a location having a need for liquid hydrogen. Liquid cryogenic fluid connection fitting 18 is used to create fluid communication between liquid conveying conduit 8 and a liquid hydrogen receiving facility and appropriate valves opened or closed. Liquid hydrogen is withdrawn from storage vessel 1 through liquid conveying conduit 8 and to the liquid hydrogen receiving facility. The pressure build up system is operated as needed to provide the pressure driving force to move the liquid from the storage vessel 1 to the liquid hydrogen receiving facility. After a desired amount of liquid hydrogen is transferred at the liquid hydrogen receiving facility, the system is shut down and liquid conveying conduit 8 is disconnected.

Subsequently, the cryogenic fluid supply apparatus is driven to other locations until the storage vessel 1 is depleted to a desired level. An advantage of the current apparatus is that when the storage vessel 1 is depleted of liquid hydrogen, the residual gas can be compressed in piston-type pump 2 and offloaded to a compressed gas receiving facility through gas conduit 4. After the storage vessel 1 is depleted to the desired level, the cryogenic fluid supply apparatus returns to a hydrogen supply depot or production facility for refilling with liquid hydrogen.

Although illustrated and described herein with reference to certain specific embodiments, the present invention is nevertheless not intended to be limited to the details shown. Rather, various modifications may be made in the details within the scope and range of equivalents of the claims and without departing from the spirit or scope of the invention. All such modifications are encompassed within the scope and spirit of the appended claims.

## Claims

1. An apparatus (10) for supplying a cryogenic fluid comprising:
a mobile support means (7);
a cryogenic liquid storage vessel (1) for containing the cryogenic fluid, said cryogenic liquid storage vessel (1) disposed on said mobile support means (7);
a piston-type pump (2) in fluid communication with said cryogenic liquid storage vessel (1), said piston-type pump (2) disposed on said mobile support means (7),
a heat exchanger (5) in fluid communication with said piston-type pump (2) and disposed to receive the cryogenic fluid from said piston-type pump (2);
a first conduit (4) having a first end and a second end wherein the first end of the first conduit is in fluid communication with said heat exchanger (5) and disposed to receive the cryogenic fluid from said heat exchanger (5), and wherein the second end of the first conduit is in fluid communication with a compressed gas connection fitting (14); and
a second conduit (8) having a first end and a second end wherein the first end of the second conduit (8) is in fluid communication with said cryogenic liquid storage vessel (1) and disposed to receive the cryogenic fluid at least in part as a liquid from said cryogenic liquid storage vessel (1) and wherein the second end of the second conduit (8) is in fluid communication with a liquid cryogenic fluid connection fitting (18), **characterised in that**
the apparatus (10) further comprises a power take-off in communication with an internal combustion engine (15); a hydraulic pump (3) and a hydraulic fluid, wherein the hydraulic pump (3) is in communication with said power take-off to transfer power from said power take-off to said piston-type pump (2) through said hydraulic fluid.

2. The apparatus (10) of claim 1 wherein said heat exchanger (5) is disposed on said mobile support means (7).

3. The apparatus (10) of claim 1 further comprising a motor vehicle (9) having the internal combustion engine (15) for transporting the mobile support means (7), and for providing power to said piston-type pump (2).

4. The apparatus (10) of claim 3 wherein the mobile support means (7) is disposed on said motor vehicle (9).

5. The apparatus (10) of claim 1 wherein said heat exchanger (5) has a heat transfer surface in communication with ambient air.

6. The apparatus (10) of claim 5 further comprising a fan (6) for circulating ambient air over said heat transfer surface.

7. The apparatus (10) of claim 6 further comprising an internal combustion engine (15) that provides power to said fan (6).

8. The apparatus (10) of claim 1 wherein said heat exchanger (5) has a heat transfer surface in communication with ambient air and further comprising a fan (6) for circulating ambient air over said heat transfer surface wherein said fan (6) receives power from said hydraulic fluid.

9. A method for supplying a cryogenic fluid comprising:
transporting a storage vessel (1) containing said cryogenic fluid in the liquid state to a first location;
increasing the pressure of at least a portion of said cryogenic fluid in the liquid state to a pressure exceeding (1000 psig) 6.89 MPa thereby forming a supercritical fluid;
heating at least a portion of said supercritical fluid thereby forming a compressed gas;
offloading at least a portion of said compressed gas at said first location; transporting said storage vessel (1) to a second location; and
offloading at least a portion of said cryogenic fluid in the liquid state to said second location.

10. The method of claim 9 further comprising the preceding step of loading said cryogenic fluid in the liquid state into said storage vessel (1) at a third location.

11. The method of claim 9 wherein the step of increasing the pressure is achieved by a piston-type pump (2) and further comprising the step of powering said piston-type pump (2) by an internal combustion engine (15).

12. The method of claim 11 further comprising the step of conveying power from the internal combustion engine (15) to the piston-type pump (2) via a hydraulic fluid.

13. The method of claim 9 further comprising:
depleting said cryogenic fluid in the liquid state from said storage vessel (1) leaving a residual gas;
compressing at least a portion of said residual gas to form a compressed residual gas; and
offloading at least a portion of said compressed residual gas.

14. The method of claim 9 further comprising monitoring at least one of a temperature, a pressure, and a flow rate.

## Patentansprüche

1. Vorrichtung (10) zur Zuführung eines kryogenen bzw. Tieftemperatur-Fluids mit:
einer mobilen Halterung (7);
einem Speicherbehälter (1) für kryogene Flüssigkeit, der das kryogene Fluid enthält, wobei der Speicherbehälter für die kryogene Flüssigkeit auf der mobilen Halterung (7) angeordnet ist;
einer Pumpe (2) vom Kolbentyp in Fluidverbindung mit dem Speicherbehälter (1) für die kryogene Flüssigkeit, wobei die Pumpe (2) vom Kolbentyp auf der mobilen Halterung (7) angeordnet ist;
einem Wärmetauscher (5) in Fluidverbindung mit der Pumpe (2) vom Kolbentyp, der so angeordnet ist, dass er das kryogene Fluid von der Pumpe (2) vom Kolbentyp empfängt;
einer ersten Leitung (4) mit einem ersten Ende und einem zweiten Ende, wobei das erste Ende der ersten Leitung in Fluidverbindung mit dem Wärmetauscher (5) steht und angeordnet ist, um das kryogene Fluid von dem Wärmetauscher (5) zu empfangen, und wobei das zweite Ende der ersten Leitung in Fluidverbindung mit einem Anschlussstück (15) für komprimiertes Gas steht; und
einer zweiten Leitung (8) mit einem ersten Ende und einem zweiten Ende, wobei das erste Ende der zweiten Leitung (8) in Fluidverbindung mit dem Speicherbehälter (1) für die kryogene Flüssigkeit steht und angeordnet ist, um das kryogene Fluid wenigstens teilweise als Flüssigkeit von dem Speicherbehälter (1) für die kryogene Flüssigkeit zu empfangen, und wobei das zweite Ende der zweiten Leitung (8) in Fluidverbindung mit einem Anschlussstück (8) für flüssiges kryogenes Fluid steht,
**dadurch gekennzeichnet,dass**
die Vorrichtung (10) weiterhin einen Kraft-Take-off bzw. eine Kraftabnahme in Verbindung mit einem Verbrennungsmotor (15), eine hydraulische Pumpe (3) und ein Hydraulikfluid aufweist, wobei die hydraulische Pumpe (3) in Verbindung mit der Kraft bzw. Energie steht, um Kraft bzw. Energie von der Leistungsabnahme durch das Hydraulikfluid zu der Pumpe (2) vom Kolbentyp zu übertragen.

2. Vorrichtung nach Anspruch 1, wobei der Wärmetausche (5) auf der mobilen Halterung (7) angeordnet ist.

3. Vorrichtung (10) nach Anspruch 1, weiterhin mit einem Kraftfahrzeug (9) mit dem Verbrennungsmotor (12) für den Transport der mobilen Halterung (7) und zur Lieferung von Energie zu der Pumpe (2) vom Kolbentyp.

4. Vorrichtung (10) nach Anspruch 3, wobei die mobile Halterung (7) auf dem Kraftfahrzeug (9) angeordnet ist.

5. Vorrichtung (10) nach Anspruch 1, wobei der Wärmetauscher (5) eine Wärmeübertragungsoberfläche hat, die in Verbindung mit der Umgebungsluft steht.

6. Vorrichtung (10) nach Anspruch 5, weiterhin mit einem Lüfter bzw. Ventilator (6) zur Umwälzung der Umgebungsluft über die Wärmeübertragungsoberfläche.

7. Vorrichtung (10) nach Anspruch 6, weiterhin mit einem Verbrennungsmotor (15), der dem Lüfter Energie zur Verfügung stellt.

8. Vorrichtung (10) nach Anspruch 1, wobei der Wärmetauscher (5) eine Wärmeübertragungsoberfläche hat, die in Verbindung mit Umgebungsluft steht, sowie weiterhin mit einem Lüfter bzw. Ventilator (6) zum Umwälzen der Umgebungsluft über die Wärmeübertragungsoberfläche, wobei der Lüfter (6) Energie von der Hydraulikflüssigkeit empfängt.

9. Verfahren zur Zuführung eines kryogenen bzw. Tieftemperatur-Fluids mit:
Transportieren eines Speicherbehälters (1), der das kryogene Fluid im flüssigen Zustand enthält, zu einer ersten Stelle;
Erhöhen des Drucks wenigstens eines Teils des kryogenen Fluids im flüssigen Zustand auf einen Druck, der 6,89 MPa (1000 psig) übersteigt, wodurch ein superkritisches Fluid gebildet wird;
Erwärmen wenigstens eines Teils des superkritischen Fluids, wodurch ein komprimiertes Gas gebildet wird;
Entladen wenigstens eines Teils des komprimierten Gases an der ersten Stelle;
Transportieren des Speicherbehälters (1) zu einer zweiten Stelle; und
Entladen wenigstens eines Teils des kryogenen Fluids im flüssigen Zustand an der zweiten Stelle.

10. Verfahren nach Anspruch 9 mit dem vorhergehenden Schritt des Entladens des kryogenen Fluids im flüssigen Zustand in den Speicherbehälter (1) an einer dritten Stelle.

11. Verfahren nach Anspruch 9, wobei der Schritt der Druckerhöhung durch eine Pumpe (2) vom Kolbentyp erreicht wird, und weiterhin mit dem Schritt des Antreibens der Pumpe (2) vom Kolbentyp durch einen Verbrennungsmotor (15).

12. Verfahren nach Anspruch 11, weiterhin mit dem Schritt der Förderung von Energie bzw. Leistung von dem Verbrennungsmotor (15) zu der Pumpe (2) vom Kolbentyp über ein Hydraulikfluid.

13. Verfahren nach Anspruch 9, weiterhin mit:
Ablassen des kryogenen Fluids im flüssigen Zustand von dem Speicherbehälter (1), wodurch ein Restgas zurückbleibt;
Komprimieren wenigstens eines Teils des Restgases, um ein komprimiertes Restgas zu erzeugen; und
Entladen wenigstens eines Teils des komprimierten Restgases.

14. Verfahren nach Anspruch 9, weiterhin mit der Überwachung wenigstens eines der folgenden Parameter:
Temperatur, Druck und Strömungsrate.

## Revendications

1. Appareil (10) destiné à délivrer un liquide cryogénique comprenant :
un moyen de support mobile (7) ;
une cuve de stockage de liquide cryogénique (1) destinée à contenir le liquide cryogénique, ladite cuve de stockage de liquide cryogénique (1) étant disposée sur ledit moyen de support mobile (7) ;
une pompe à piston (2) en communication fluide avec ladite cuve de stockage de liquide cryogénique (1), ladite pompe à piston (2) étant disposée sur ledit moyen de support mobile (7) ;
un échangeur de chaleur (5) en communication fluide avec ladite pompe à piston (2) et disposé pour recevoir le liquide cryogénique de ladite pompe à piston (2) ;
un premier conduit (4) ayant une première extrémité et une seconde extrémité dans lequel la première extrémité du premier conduit est en communication fluide avec ledit échangeur de chaleur (5) et disposée pour recevoir le liquide cryogénique dudit échangeur de chaleur (5), et dans lequel la seconde extrémité du premier conduit est en communication fluide avec un raccord de connexion de gaz comprimé (14) ; et
un second conduit (8) ayant une première extrémité et une seconde extrémité dans lequel la première extrémité du second conduit (8) est en communication fluide avec ladite cuve de stockage de liquide cryogénique (1) et disposée pour recevoir le liquide cryogénique au moins en partie sous la forme d'un liquide depuis ladite cuve de stockage de liquide cryogénique (1) et dans lequel la seconde extrémité du second conduit (8) est en communication fluide avec un raccord de connexion de liquide cryogénique liquide (18), **caractérisé en ce que**
l'appareil (10) comprend en outre une prise de force en communication avec un moteur à combustion interne (15) et une pompe hydraulique (3) et un fluide hydraulique, dans lequel la pompe hydraulique (3) est en communication avec ladite prise de force pour transférer une puissance de ladite prise de force à ladite pompe à piston (2) à travers ledit fluide hydraulique.

2. Appareil (10) selon la revendication 1, dans lequel ledit échangeur de chaleur (5) est disposé sur ledit moyen de support mobile (7).

3. Appareil (10) selon la revendication 1, comprenant en outre un véhicule à moteur (9) ayant le moteur à combustion interne (15) pour transporter le moyen de support mobile (7), et pour fournir une puissance à ladite pompe à piston (2).

4. Appareil (10) selon la revendication 3, dans lequel le moyen de support mobile (7) est disposé sur ledit véhicule à moteur (9).

5. Appareil (10) selon la revendication 1, dans lequel ledit échangeur de chaleur (5) a une surface de transfert de chaleur en communication avec l'air ambiant.

6. Appareil (10) selon la revendication 5, comprenant en outre un ventilateur (6) pour faire circuler l'air ambiant sur ladite surface de transfert de chaleur.

7. Appareil (10) selon la revendication 6, comprenant en outre un moteur à combustion interne (15) qui fournit une puissance audit ventilateur (6).

8. Appareil (10) selon la revendication 1, dans lequel ledit échangeur de chaleur (5) a une surface de transfert de chaleur en communication avec l'air ambiant et comprenant en outre un ventilateur (6) pour faire circuler l'air ambiant sur ladite surface de transfert de chaleur où ledit ventilateur (6) reçoit une puissance dudit fluide hydraulique.

9. Procédé destiné à délivrer un liquide cryogénique comprenant les étapes consistant à :
transporter une cuve de stockage (1) contenant ledit liquide cryogénique à l'état liquide à un premier emplacement ;
augmenter la pression d'au moins une partie dudit liquide cryogénique à l'état liquide à une pression dépassant 6,89 MPa (1 000 psig) formant ainsi un fluide supercritique ;
chauffer au moins une partie dudit fluide supercritique formant ainsi un gaz comprimé ;
décharger au moins une partie dudit gaz comprimé audit premier emplacement ;
transporter ladite cuve de stockage (1) à un deuxième emplacement ; et
décharger au moins une partie dudit liquide cryogénique à l'état liquide audit deuxième emplacement.

10. Procédé selon la revendication 9, comprenant en outre l'étape précédente consistant à charger ledit liquide cryogénique à l'état liquide dans ladite cuve de stockage (1) en un troisième emplacement.

11. Procédé selon la revendication 9, dans lequel l'étape consistant à augmenter la pression est atteinte par une pompe à piston (2) et comprenant en outre l'étape consistant à alimenter ladite pompe à piston (2) par un moteur à combustion interne (15).

12. Procédé selon la revendication 11, comprenant en outre l'étape consistant à acheminer la puissance du moteur à combustion interne (15) à la pompe à piston (2) via un fluide hydraulique.

13. Procédé selon la revendication 9, comprenant en outre les étapes consistant à :
vider ledit liquide cryogénique à l'état liquide de ladite cuve de stockage (1) laissant un gaz résiduel ;
comprimer au moins une partie dudit gaz résiduel pour former un gaz résiduel comprimé ; et
décharger au moins une partie dudit gaz résiduel comprimé.

14. Procédé selon la revendication 9, comprenant en outre la surveillance d'au moins l'un d'une température, d'une pression et d'un débit.
